# EUROPÄISCHE PATENTSCHRIFT

(11) **EP 3 530 560 B1**
(45) Veröffentlichungstag und Bekanntmachung des Hinweises auf die Patenterteilung: **07.06.2023**
(21) Anmeldenummer: 19158811.0
(22) Anmeldetag: 22.02.2019
(51) Int. Cl.: B63H 23/24, B63H 21/17, B60L 58/10, H01M 10/48, H02H 7/18

(54) **VORRICHTUNG ZUR ÜBERWACHUNG EINES BOOTSANTRIEBES**
DEVICE FOR MONITORING A BOAT DRIVE
DISPOSITIF DE SURVEILLANCE D'UN ENTRAÎNEMENT DE BATEAU

(30) Priorität: 22.02.2018 DE 102018104068
(43) Veröffentlichungstag der Anmeldung: 28.08.2019
(73) Patentinhaber: Torqeedo GmbH, 82205 Gilching (DE)
(72) Erfinder: Basler, Hendrik, 80634 München (DE)
(74) Vertreter: Nordmeyer, Philipp Werner

(56) Entgegenhaltungen:
- EP-A1- 2 730 492
- JP-A- 2013 074 707
- US-B1- 8 944 865

## Beschreibung

### Technisches Gebiet

Die vorliegende Erfindung betrifft eine Vorrichtung zur Überwachung eines Bootsantriebes, bevorzugt zur Überwachung einer Antriebsbatterie eines Bootsantriebes, welcher beispielsweise in Booten mit einem Elektroantrieb vorgesehen ist, insbesondere eine Vorrichtung zur Überwachung einer Antriebsbatterie eines Bootsantriebes, umfassend einen ersten Wassersensor, der dazu eingerichtet ist, beim Erreichen eines ersten Wasserstandes den Bootsantrieb abzuschalten. Die Erfindung umfasst weiterhin einen zweiten Wassersensor, der dazu eingerichtet ist, beim Erreichen eines zweiten Wasserstandes eine Wasserstandswarnung auszugeben.

### Stand der Technik

Aus dem Stand der Technik ist es bekannt, Antriebsbatterien für Boote, die von einem Elektromotor angetrieben werden, mit einer Detektionsschaltung zur Detektion des Untertauchens der Antriebsbatterie zu versehen. Diese Detektionsschaltung dient dazu, die Antriebsbatterie dann abzuschalten, wenn sie in Wasser untergetaucht wird. Auf diese Weise können Schäden an der Antriebsbatterie selbst, sowie Schäden durch Stromschläge, Kurzschlüsse und Explosionen reduziert oder gar ganz ausgeschlossen werden, wenn die Antriebsbatterie untergetaucht wird.

Eine solche Detektionsschaltung ist beispielsweise in den Antriebsbatterien mit der Bezeichnung Power 26-104 der Anmelderin vorgesehen und ist beispielsweise derart ausgeführt, dass die Detektionsschaltung zur Detektion des Untertauchens einen Schwingkreis ausbildet, dessen Kondensator im Prinzip zwischen den Polen der Batterie oder einem Kontakt und einem Pol der Batterie ausgebildet ist und die entsprechende Eigenschwingung des Schwingkreises ausgewertet wird. Findet eine Verschiebung der Eigenfrequenz statt, kann davon ausgegangen werden, dass sich das zwischen den Polen der Batterie oder dem Kontakt und einem Pol der Batterie vorliegende Dielektrikum verändert hat. Insbesondere verändert sich das Dielektrikum zwischen den Polen und/oder Kontakten, wenn die Antriebsbatterie untergetaucht wird, sodass entsprechend die Kapazität des Kondensators des Schwingkreises verändert wird und sich dadurch die Eigenfrequenz des Schwingkreises ändert. Auf diese Weise kann festgestellt werden, ob sich die beiden Pole beziehungsweise ein Pol und ein Kontakt der Antriebsbatterie im Wasser befindet.

Die Detektionsschaltung, die auswertet, ob ein Untertauchen der Antriebsbatterie stattfindet, ist üblicherweise direkt innerhalb der Batterie mit einem Betriebsschalter der Batterie verbunden. Der Betriebsschalter stellt einen Kontakt zwischen den jeweiligen Polen und den Batteriezellen her. Der Betriebsschalter ist üblicher Weise innerhalb des Gehäuses der Antriebsbatterie angeordnet und wird über ein externes Schaltsignal ein- oder ausgeschaltet.

Die Antriebsbatterie kann üblicherweise über ein Batteriemanagementsystem und/oder eine externe Ansteuerung geschaltet werden, um die Antriebsbatterie für den Betrieb entsprechend einzuschalten beziehungsweise nach dem Betrieb oder für den Transport wieder abzuschalten. Die beschriebene Vorrichtung zum Ausschalten der Batterie beim Untertauchen wirkt direkt auf diesen Betriebsschalter.

Aus der WO 2014/ 072 071 A1 ist ein elektrischen Speicher bekannt, der mindestens ein Speicherelement und einen positiven und einen negativen Pol aufweist, wobei die Pole in stromleitender Verbindung mit dem Speicherelement stehen, wobei ein Wassersensor vorgesehen ist, welcher feststellt, ob sich einer der Pole in Kontakt mit Wasser befindet, und wobei der Wassersensor in Wirkverbindung mit einer Abschalteinrichtung steht, welche zur Unterbrechung der stromleitenden Verbindung zwischen mindestens einem der Pole und dem Speicherelement dient.

Die US 5 576 582 A zeigt eine automatische Pumpensteuerung und insbesondere eine automatische Steuerung für eine Lenzpumpe, wie sie beispielsweise in einem Seeschiff verwendet wird, wobei bei einem hohen Wasserstand eine Hupe aktiviert wird.

### Darstellung der Erfindung

Ausgehend von diesem bekannten Stand der Technik ist es eine Aufgabe der vorliegenden Erfindung, eine Vorrichtung zur Überwachung eines Bootsantriebes bereitzustellen, welche eine weiter verbesserte Funktionalität aufweist und einen verbesserten Schutz für den Bootsantrieb bereitstellt, und insbesondere eine Vorrichtung zur Überwachung eines Bootsantriebes bereitzustellen, welche eine zu einem Hupsignal alternative Warnung ausgibt.

Diese Aufgabe wird durch eine Vorrichtung mit den Merkmalen des Anspruchs 1 gelöst. Vorteilhafte Ausgestaltungen ergeben sich aus den abhängigen Ansprüchen, der vorliegenden Beschreibung sowie den beigefügten Figuren.

Entsprechend wird eine Vorrichtung zur Überwachung eines Bootsantriebes, bevorzugt zur Überwachung einer Antriebsbatterie eines Bootsantriebes, vorgeschlagen, umfassend einen ersten Wassersensor, der dazu eingerichtet ist, beim Erreichen eines ersten Wasserstandes den Bootsantrieb abzuschalten. Erfindungsgemäß ist ein zweiter Wassersensor vorgesehen, der dazu eingerichtet ist, beim Erreichen eines zweiten Wasserstandes eine Wasserstandswarnung auszugeben, wobei der zweite Wassersensor über einen Systembus mit einer Steuerung des Bootsantriebes kommuniziert und die Steuerung dazu eingerichtet ist, auf den Empfang der Wasserstandswarnung hin eine Warnung auszugeben, wobei auf den Empfang der Wasserstandswarnung hin die Leistung des Bootsantriebes reduziert wird.

Dadurch, dass ein zweiter Wassersensor vorgesehen ist, der dazu eingerichtet ist, beim Erreichen eines zweiten Wasserstandes eine Wasserstandswarnung auszugeben, kann das Sicherheitsniveau für den Bootsantrieb insgesamt weiter erhöht werden.

Insbesondere ist es auf diese Weise möglich, bereits bei einem niedrigeren Wasserstand im Bereich des Bootsantriebes und insbesondere im Bereich der Antriebsbatterie des Bootsantriebes das Vorliegen von Wasser zu detektieren und auf diese Weise festzustellen, dass überhaupt Wasser in diesem Bereich vorliegt. Auf diese Weise kann bewertet werden, ob dieses detektierte Wasser möglicherweise eine Gefahr für den Bootsantrieb und insbesondere für die Antriebsbatterie darstellt. Bereits zu diesem Zeitpunkt können entsprechend auch Maßnahmen ergriffen werden, um Schäden von dem Bootsantrieb und insbesondere von der Antriebsbatterie abzuwenden.

Bevorzugt ist der zweite Wasserstand unterhalb des ersten Wasserstandes angeordnet. Der erste Wassersensor und der zweite Wassersensor sind dabei bevorzugt in der Abteilung des Boots angeordnet, in der der Bootsantrieb und insbesondere eine Antriebsbatterie angeordnet ist. Dabei sind der erste Wassersensor und der zweite Wassersensor bevorzugt in derselben Abteilung - beispielsweise übereinander - angeordnet.

Auf diese Weise wird es ermöglicht, das Ansteigen eines Wasserstandes innerhalb der für den Bootsantrieb relevanten Abteilungen festzustellen. Diese Feststellung kann dann durchgeführt werden, bevor eine Schädigung des Bootsantriebes erreicht wird und bevor der Wasserstand beispielsweise die Pole einer Antriebsbatterie des Bootsantriebes erreicht hat.

Bevorzugt ist der erste Wassersensor in einer Komponente des Bootsantriebs mit aufgenommen. Der erste Wassersensor kann besonders bevorzugt in der Antriebsbatterie aufgenommen sein und besonders bevorzugt kann in einigen oder allen Antriebsbatterien jeweils ein erster Wassersensor aufgenommen sein.

Der erste Wassersensor kann dann über eine Hardwareverbindung direkt mit einem Betriebsschalter der Antriebsbatterie verbunden sein, so dass beim Erreichen des ersten Wasserstandes ein direktes Abschalten der Antriebsbatterie über die Betätigung des Betriebsschalters der Antriebsbatterie erfolgt. Die Antriebsbatterie ist damit entsprechend in einem ersten Schritt im Wesentlichen bezüglich der Abschaltung durch den ersten Wassersensor autark und nicht an die übrigen Komponenten des Bootsantriebs gebunden. Insbesondere kann die zum Betrieb des ersten Wassersensors benötigte Energie auch durch die Antriebsbatterie bereitgestellt werden.

Der erste Wassersensor kann bevorzugt aber auch außerhalb einer Antriebsbatterie des Bootsantriebes angeordnet sein und über eine Hardwareverbindung mit einem Betriebsschalter der Antriebsbatterie oder den Betriebsschaltern mehrerer Antriebsbatterien direkt verbunden sein. Damit ist es möglich, den ersten Wassersensor auf einer Höhe in der die Antriebsbatterien oder andere Komponenten des Bootsantriebs aufnehmenden Abteilung des Bootes anzuordnen, die noch keine Schädigung der Komponenten befürchten lässt. Der erste Wassersensor kann insbesondere auch auf einer Höhe unterhalb der Pole der Antriebsbatterie angeordnet sein.

Der erste Wassersensor kann bei einer Anordnung außerhalb der Antriebsbatterie dennoch durch die Antriebsbatterie mit Energie versorgt werden, so dass eine Abschaltung der Antriebsbatterie beim Erreichen des ersten Wasserstandes auch autark stattfinden kann, ohne dass andere Systeme des Bootsantriebs dazu benötigt werden würden.

Ein außerhalb der Antriebsbatterie angeordneter erster Wassersensor kann dabei über eine Hardwareverbindung direkt mit dem Betriebsschalter der Antriebsbatterie verbunden sein. Der erste Wassersensor kann auch mit den Betriebsschaltern mehrerer Antriebsbatterien verbunden sein.

Der zweite Wasserstand kann dabei bevorzugt unterhalb des ersten Wasserstandes so angeordnet sein, dass der erste Wasserstand dem Wasserstand entspricht, bei welchem die Pole einer Antriebsbatterie des Bootsantriebs untergetaucht sind oder gerade noch nicht untergetaucht sind und der zweite Wasserstand einem Wasserstand entspricht, welcher unterhalb des ersten Wasserstandes so angeordnet ist, dass eine Schädigung des Bootsantriebes und insbesondere eine Schädigung einer Antriebsbatterie des Bootsantriebes noch nicht zu befürchten ist. Damit kann das Vorliegen von Wasser in einer für den Bootsantrieb relevanten Abteilung detektiert werden, bevor das Wasser zu einem Problem für den Bootsantrieb werden kann.

Mit anderen Worten ist der erste Wassersensor bevorzugt oberhalb des zweiten Wassersensors angeordnet und insbesondere ist der erste Wasserstand bevorzugt oberhalb des zweiten Wasserstandes angeordnet.

In einer bevorzugten Weiterbildung ist der erste Wassersensor über eine Hardwareverbindung mit dem Bootsantrieb, insbesondere einer Antriebsbatterie des Bootsantriebes, verbunden, um den Bootsantrieb beim Erreichen des ersten Wasserstandes direkt abzuschalten und insbesondere eine Antriebsbatterie des Bootsantriebes direkt abzuschalten.

Der erste Wassersensor ist entsprechend bevorzugt dazu eingerichtet, den Bootsantrieb direkt abzuschalten. Insbesondere ist der erste Wassersensor dazu eingerichtet, den Bootsantrieb ohne einen Umweg über eine Steuerung - beispielsweise eine Systemsteuerung oder ein Batteriemanagementsystem - abzuschalten. Damit kann mittels des ersten Wassersensors eine sichere und hardwarebasierte Abschaltung des Bootsantriebes erreicht werden, sobald ein kritischer Wasserstand von dem ersten Wassersensor detektiert wird. Dies ist beispielsweise dann der Fall, wenn die Pole einer Antriebsbatterie des Bootsantriebes untergetaucht sind.

Durch die direkte Abschaltung des Bootsantriebes mittels des ersten Wassersensors kann entsprechend erreicht werden, dass weitere Komponenten, welche möglicherweise für Wasserschäden anfällig sind, nicht involviert sind und eine sichere, hardwarebasierte Abschaltung im Falle beispielsweise eines Untertauchens der Pole der Antriebsbatterien erreicht wird.

Durch die Hardwareverbindung kann auch erreicht werden, dass Fehler, Störungen oder Verzögerungen durch die Kommunikation über einen Systembus mit einer Steuerung keinen Einfluss auf das direkte und unmittelbare Abschalten des Bootsantriebs und insbesondere auf die Reaktionsgeschwindigkeit haben können. Vielmehr schaltet der erste Wassersensor den Bootsantrieb beim Vorliegen eines gefährlichen Wasserstands direkt ab.

Entsprechend kann das Sicherheitsniveau des Bootsantriebes insgesamt erhöht werden.

Weiterhin kommuniziert der zweite Wassersensor über einen Systembus mit einer Steuerung des Bootsantriebes und die Steuerung ist dazu eingerichtet, auf den Empfang der Wasserstandswarnung vom zweiten Wassersensor hin eine Warnung an einen Nutzer auszugeben.

Dabei ist die Steuerung des Bootsantriebes dazu eingerichtet, auf den Empfang der Wasserstandswarnung hin die Leistung des Bootsantriebes zu reduzieren.

Die Steuerung des Bootsantriebs kann bevorzugt auch dazu eingerichtet sein, auf den Empfang einer Wasserstandswarnung hin eine Sequenz zum Abschalten des Bootsantriebs einzuleiten, bevorzugt nach dem Ablauf einer vorgegebenen Zeitspanne.

Die Steuerung ist bevorzugt auch dazu eingerichtet, Maßnahmen zu ergreifen, welche einem Ansteigen des Wasserstands zu einem kritischen Wasserstand hin entgegenwirken und/oder ist dazu eingerichtet, eine Warnung an einen Nutzer des Bootsantriebes auszugeben.

Insbesondere kann die Steuerung so eingerichtet sein, dass sie beispielsweise eine Lenzpumpe aktiviert, sobald der zweite Wasserstandessensor an die Steuerung kommuniziert, dass ein vorgegebener Wasserstand erreicht wurde. Mittels der Lenzpumpe kann dann das Wasser aus den jeweiligen Abteilen des Boots ausgetragen werden, sodass ein Abschalten des Bootsantriebes beziehungsweise ein Abschalten der Antriebsbatterie des Bootsantriebes möglichwerweise vermieden werden kann.

Weiterhin kann eine Warnmeldung an den Nutzer des Boots Antriebes dahingehend ausgegeben werden, dass ein Wasserstand im Boot erreicht wurde, welcher ohne weitere Veränderung zwar noch unproblematisch ist, aber beobachtet werden muss und zu einem gefährlichen Zustand führen könnte.

Die Steuerung ist so eingerichtet, dass sie in Reaktion auf den Empfang einer Wasserstandswarnung von dem zweiten Wassersensor eine Reduzierung der Leistung des Bootsantriebes durchführt, um dem Nutzer des Bootsantriebes zu signalisieren, dass ein Eingriff erforderlich ist und dass eine potentielle Gefahr besteht.

In einer bevorzugten Weiterbildung kommuniziert auch der erste Wassersensor über einen Systembus mit einer Steuerung des Bootsantriebes und die Steuerung ist dazu eingerichtet, beim Empfang einer Abschaltmeldung vom ersten Wassersensor auch über einen Steuerbefehl den Bootsantrieb abzuschalten. Durch den Steuerbefehl können auch andere Systeme des Bootsantriebs abgeschaltet werden, als die, welche mittels des ersten Wassersensors direkt abgeschaltet werden. Mit anderen Worten findet sowohl eine direkte Abschaltung des Bootsantriebs durch den ersten Wassersensor statt, als auch eine Abschaltung des Bootsantriebs über einen Steuerbefehl durch die Signalisierung von der Steuerung.

Besonders bevorzugt ist die Steuerung dazu eingerichtet, beim Empfang einer Meldung über das Abschalten des Bootsantriebes vom ersten Wassersensor eine Warnung an einen Nutzer auszugeben.

Damit wird beim Erreichen des ersten Wasserstandes, also des kritischen Wasserstandes im Boot, ein direktes Abschalten des Bootsantriebs erreicht und gleichzeitig wird aber auch die Steuerung des Boots über die Kommunikation über den Systembus darüber informiert, dass der erste Wassersensor den Bootsantrieb abgeschaltet hat. Der Nutzer des Bootsantriebs bekommt hier entsprechend eine Nachricht über den Grund der Abschaltung und kann entsprechende Maßnahmen einleiten. Die Steuerung kann auch eine Lenzpumpe aktivieren, um den Wasserstand wieder zu reduzieren.

Bevorzugt ist der erste Wassersensor in Reihe mit einem Not-Aus Schalter des Bootsantriebes geschaltet. Mit anderen Worten ist der erste Wassersensor auf der gleichen Hierarchiestufe wie der Not-Aus Schalter angeordnet und lässt einen ebenfalls unmittelbaren Zugriff auf die Abschaltung des Bootsantriebs zu.

Bevorzugt ist die Steuerung dazu eingerichtet, beim Empfang einer Wasserstandswarnung von dem zweiten Wassersensor und/oder beim Empfang einer Meldung über das Abschalten des Bootsantriebes vom ersten Wassersensor eine Lenzpumpe zum Entfernen des Wassers aus dem Boot einzuschalten.

### Kurze Beschreibung der Figur

Bevorzugte weitere Ausführungsformen der Erfindung werden durch die nachfolgende Beschreibung der Figur näher erläutert. Dabei zeigt:

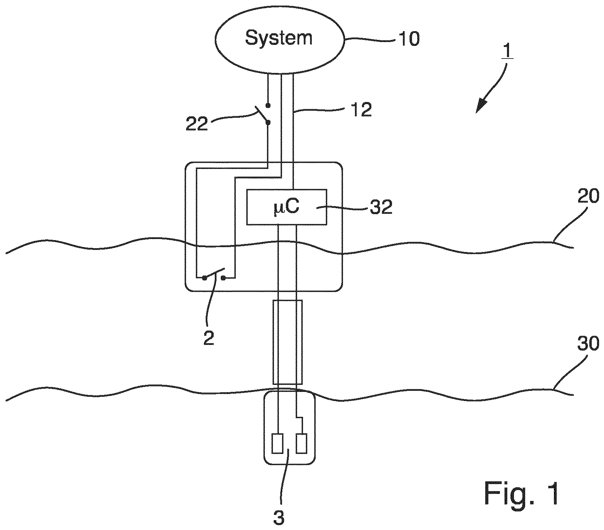

- Figur 1: eine schematische Darstellung einer Vorrichtung zur Überwachung eines Bootsantriebes in einem möglichen Ausführungsbeispiel.

### Detaillierte Beschreibung bevorzugter Ausführungsbeispiele

Im Folgenden werden bevorzugte Ausführungsbeispiele anhand der Figur beschrieben.

In Figur 1 ist schematisch eine Vorrichtung 1 zur Überwachung eines Bootsantriebes gezeigt.

Der Bootsantrieb ist exemplarisch anhand der Steuerung 10 angedeutet. Der Bootsantrieb kann beispielsweise eine Antriebsbatterie, eine Batteriesteuerung, eine Antriebssteuerung, eine Leistungselektronik und/oder einen Elektromotor für das Boot umfassen. Diese und andere Komponenten zum Antrieb eines Boots mit einem Elektromotor sind als Bootsantrieb zu verstehen.

Die Steuerung 10 kann entweder als übergeordnete Steuerung vorgesehen, sein, welche mehrere oder sämtliche Komponenten des Bootsantriebes steuert und überwacht, oder auch als Steuerung nur einer bestimmten Komponente des Bootsantriebes vorgesehen sein. Ein typisches Beispiel für eine Steuerung des Bootsantriebes ist ein Batteriemanagementsystem, welches die Steuerung und Überwachung einer, mehrerer oder aller Antriebsbatterien des Bootsantriebes übernimmt. Ein Batteriemanagementsystem kann unter anderem die Antriebsbatterie(n) einschalten und abschalten, um die Antriebsbatterie(n) für die Verwendung fertig zu machen und/oder um die Antriebsbatterie(n) nach der Verwendung abzuschalten und so in einen sicheren Zustand zu bringen.

In der Vorrichtung 1 ist ein erster Wassersensor 2 vorgesehen, welcher beim Erreichen eines schematisch angedeuteten ersten Wasserstandes 20 den Bootsantrieb direkt abschaltet.

Der erste Wassersensor 2 ist hier in Form eines hardwarebasierten Schalters gezeigt. Der erste Wassersensor 2 kann auch direkt auf einen hardwarebasierten Schalter wirken, mit dem der Bootsantrieb direkt abgeschaltet werden kann. Beispielsweise kann der erste Wassersensor 2 direkt eine Antriebsbatterie oder mehrere oder alle Antriebsbatterien durch die Betätigung des hardwarebasierten Schalters abschalten.

Der erste Wassersensor 2 kann beispielsweise auch in einer Antriebsbatterie oder in mehreren oder allen Antriebsbatterien vorgesehen sein und direkt auf einen Betriebsschalter der jeweiligen Antriebsbatterie wirken, um auf diese Weise ein direktes Abschalten der Antriebsbatterie zu erreichen, sobald der erste Wasserstand 20 erreicht ist und entsprechend ein gefährlicher Zustand für die Antriebsbatterie erreicht wurde.

Mit anderen Worten wirkt der erste Wassersensor 2 direkt auf den Bootsantrieb und das Kommunizieren von Sensorsignalen über einen Systembus 12 an eine Steuerung 10, sowie das Auswerten der Sensorsignale und das Umwandeln in einen Abschaltsignal sowie das Kommunizieren des Abschaltsignals an einen Schalter des Bootsantriebes ist hier entsprechend nicht notwendig. Vielmehr kann der hardwarebasierte Schalter, durch den der erste Wassersensor 2 ausgebildet ist, ohne diese Zwischenschritte eine direkte Abschaltung des Bootsantriebes erreichen. Damit werden Verzögerungen oder Fehler in der Kommunikation und/oder bei der Auswertung ausgeschlossen und ein sicheres und schnelles Abschalten kann erreicht werden.

Der hardwarebasierte Schalter des ersten Wassersensors 2 ist bevorzugt mit einem Not-Aus Schalter 22 des Bootsantriebes in Reihe geschaltet und steht damit auf der gleichen Hierarchiestufe wie der Not-Aus Schalter 22 und weist die gleiche Unmittelbarkeit des Schutzmechanismus auf.

Der erste Wassersensor 2 kann beispielsweise durch ein Schwimmersystem ausgebildet sein oder aber durch das eingangs erwähnte System der Messung einer Kapazität zwischen zwei Polen beziehungsweise zwischen zwei Elektroden einer Batterie, welche gemeinsam einen Kondensator eines Schwingkreises ausbilden.

Der erste Wassersensor 2 kann entsprechend dazu vorgesehen sein, beispielsweise eine Antriebsbatterie des Bootsantriebes sofort direkt abzuschalten, sobald die Pole der Batterie in Wasser eingetaucht sind oder Gefahr laufen, dies zu tun. Dies ist unbedingt notwendig, um zu vermeiden, dass der Bootsantrieb und insbesondere die Antriebsbatterie zerstört wird. Weiterhin kann die mit dem Untertauchen der Batterie verbundene Explosionsgefahr auf dem Boot durch das Abschalten der Batterie verringert werden, da das Auftreten einer Elektrolyse des (Salz-) Wassers vermieden wird und damit entsprechend auch kein Knallgas produziert wird.

Der erste Wassersensor 2 kann über eine Hardwareverbindung direkt mit einem Betriebsschalter der Antriebsbatterie verbunden sein, so dass beim Erreichen des ersten Wasserstandes 20 ein direktes Abschalten der Antriebsbatterie über die Betätigung des Betriebsschalters der Antriebsbatterie erfolgt. Die Antriebsbatterie ist damit entsprechend in einem ersten Schritt im Wesentlichen bezüglich der Abschaltung durch den ersten Wassersensor 2 autark und nicht an die übrigen Komponenten des Bootsantriebs gebunden. Insbesondere kann die zum Betrieb des ersten Wassersensors 2 benötigte Energie auch durch die Antriebsbatterie bereitgestellt werden.

Der erste Wassersensor 2 kann bevorzugt aber auch außerhalb einer Antriebsbatterie des Bootsantriebes angeordnet sein und über eine Hardwareverbindung mit einem Betriebsschalter der Antriebsbatterie oder den Betriebsschaltern mehrerer Antriebsbatterien direkt verbunden sein. Damit ist es möglich, den ersten Wassersensor 2 auf einer Höhe in der die Antriebsbatterien oder andere Komponenten des Bootsantriebs aufnehmenden Abteilung des Bootes anzuordnen, die noch keine Schädigung der Komponenten befürchten lässt. Der erste Wassersensor 2 kann insbesondere auch auf einer Höhe unterhalb der Pole der Antriebsbatterie angeordnet sein.

Der erste Wassersensor 2 kann bei einer Anordnung außerhalb der Antriebsbatterie dennoch durch die Antriebsbatterie mit Energie versorgt werden, so dass eine Abschaltung der Antriebsbatterie beim Erreichen des ersten Wasserstandes 20 auch autark stattfinden kann, ohne dass andere Systeme des Bootsantriebs dazu benötigt werden würden.

Ein außerhalb der Antriebsbatterie angeordneter erster Wassersensor 2 kann dabei über eine Hardwareverbindung direkt mit dem Betriebsschalter der Antriebsbatterie verbunden sein. Der erste Wassersensor 2 kann auch mit den Betriebsschaltern mehrerer Antriebsbatterien verbunden sein.

Die Vorrichtung 1 umfasst weiterhin einen zweiten Wassersensor 3, welcher beim Erreichen eines schematisch dargestellten zweiten Wasserstandes 30 eine Wasserstandswarnung an die Steuerung 10 des Bootsantriebes kommuniziert. Der zweite Wassersensor 3 ist, wie sich aus Figur 1 schematisch ergibt, in einer tieferen Position relativ zu dem ersten Wassersensor 2 angeordnet, sodass beim Ausgeben einer Wasserstandswarnung durch den zweiten Wassersensor 3 zunächst ein Wasserniveau erreicht ist, welches noch nicht zu einer unmittelbaren Schädigung des Bootsantriebes führt, aber ein Warnniveau für den Wasserstand im Boot darstellt, bei welchem der Nutzer beziehungsweise Bootsführer über das Vorliegen von Wasser im Bereich des Bootsantriebes und damit über einen etwaigen Wassereinbruch gewarnt werden muss.

Der erste Wassersensor 2 ist damit entsprechend auf einem höheren Niveau innerhalb des Boots angeordnet, welches einem Höhenniveau entspricht, bei dem eine Schädigung des Bootsantriebes zu erwarten ist oder gerade noch nicht zu erwarten ist. Dieses Höhenniveau des ersten Wassersensors 2 kann beispielsweise, wie gerade beschrieben, durch die Anordnung der Pole der Antriebsbatterie des Bootsantriebes vorgegeben sein, da ein Untertauchen der Pole zu Sicherheitsproblemen führen kann.

Der zweite Wassersensor 3 ist in Form eines mit einem Systembus 12, insbesondere einem CAN-Bus des Bootsantriebes, kommunizierenden Wassersensors 3 vorgesehen.

Der Systembus 12 kommuniziert mit dem zweiten Wassersensor 3 über einen entsprechend eingerichteten Mikroprozessor 32, welcher zum einen eine ständige Überwachung des zweiten Wassersensors 3 übernimmt, und welcher zum anderen die Kommunikation zwischen dem zweiten Wassersensor 3 und dem Systembus 12 übernimmt.

Beim Vorliegen von Wasser bei dem zweiten Wasserstand 30, bei dem der zweite Wassersensor 3 anspricht, wird entsprechend eine Wasserstandswarnung an den Systembus 12 ausgegeben, beispielweise mittels des Mikroprozessors 32, wobei die Wasserstandswarnung dann mittels des Systembusses 12 an die Steuerung 10 übermittelt wird.

Damit kann erreicht werden, dass bereits beim Vorliegen eines bestimmten Wasserstandes innerhalb eines Abschnitts des Boots, in welchem relevante Teile des Bootsantriebes, insbesondere die Antriebsbatterien des Bootsantriebes, angeordnet sind, eine Wasserstandswarnung ausgegeben wird. Die Wasserstandswarnung kann dabei herausgegeben werden, auch wenn noch keine unmittelbare Gefährdung der Funktion des Bootsantriebes durch Wasser vorliegt aber bereits ein entsprechender Wasserstand erreicht wurde.

Auf Grundlage der Wasserstandswarnung, welche der zweite Wassersensor 3 an eine Steuerung 10 des Bootsantriebes kommuniziert, kann dann eine entsprechende Benachrichtigung an den Nutzer des Boots ausgegeben werden. Diese Benachrichtigung kann in Form einer beispielsweise auf einem Display angezeigten Warnung, in Form einer akustischen oder optischen Warnung oder aber auch in Form eines charakteristischen Verhaltens des Bootsantriebes, beispielsweise einer Verlangsamung oder eines impulsweisen Betriebs des Bootsantriebes, erreicht werden. Der Nutzer des Bootsantriebes wird auf diese Weise dazu angeregt, einen Eingriff dahingehend vorzunehmen, dass das Eindringen von Wasser reduziert wird und das Wasser aus dem relevanten Bereich des Boots entfernt wird, damit der Bootsantrieb in einem sicheren Zustand verbleibt.

Die Steuerung 10 des Bootsantriebes, an welche der zweite Wassersensor 3 die Wasserstandswarnung kommuniziert, kann weiterhin Maßnahmen einleiten, welche den Bootsantrieb vor einem Schaden durch Wasser weiter schützt. Beispielsweise kann die Steuerung 10 automatisch eine Lenzpumpe starten, mittels welcher das Wasser, welches den durch den zweiten Wassersensor 3 definierten zweiten Wasserstand 30 überschritten hat, aus diesem Bereich des Bootes herausgefördert werden kann.

Die Steuerung 10 kann dazu eingerichtet sein, weiterhin eine automatische Verlangsamung der Fahrstufe des Bootsantriebes durchführen, um insgesamt die Stromaufnahme zu reduzieren und damit mögliche Wärmeentwicklungen der einzelnen Komponenten des Bootsantriebes zu reduzieren, sodass beim möglichen Zusammentreffen mit Wasser Schädigungen reduziert werden können. Diese automatische Verlangsamung der Fahrstufe kann vom Fahrer des Bootes aber wieder manuell aufgehoben werden, um das Boot in Gefahrensituationen so lange wie möglich manövrierfähig zu halten.

In einer weiteren Ausbildung kann die Steuerung 10 dazu eingerichtet sein, bereits bei Vorliegen eines Wasserniveaus, welches dem zweiten Wasserstand 30 des zweiten Wassersensors 3 entspricht, eine Sequenz zur Abschaltung des Bootsantriebes einzuleiten, beispielsweise darüber, dass nach Ablauf einer vorgegebenen, bestimmten Zeitspanne die Fahrstufe des Bootsantriebes nach und nach auf Null reduziert wird und der Bootsantrieb und insbesondere eine Antriebsbatterie dann abgeschaltet wird.

Der erste Wassersensor 2, welcher eine Hardwareverbindung mit dem Bootsantrieb derart aufweist, dass auf dem Systembus 12 möglicherweise anfallende Fehler ein Abschalten nicht beeinflussen, ist dazu gedacht, eine Sicherung des Bootsantriebes dahingehend durchzuführen, dass der Bootsantrieb abschaltet, sobald sicherheitskritische Teile des Bootsantriebes in Wasser eingetaucht werden, beispielsweise die Pole der Antriebsbatterien.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste:

- 1: Vorrichtung zur Überwachung eines Bootsantriebes
- 2: erster Wassersensor
- 3: zweiter Wassersensor
- 10: Steuerung
- 12: Systembus
- 20: erster Wasserstand
- 22: Not-Aus Schalter
- 30: zweiter Wasserstand
- 32: Mikroprozessor

## Patentansprüche

1. Vorrichtung (1) zur Überwachung eines Bootsantriebes, bevorzugt zur Überwachung einer Antriebsbatterie eines Bootsantriebes, umfassend eine Steuerung (10) und einen ersten Wassersensor (2), der dazu eingerichtet ist, beim Erreichen eines ersten Wasserstandes (20) den Bootsantrieb abzuschalten,
**gekennzeichnet durch**
einen zweiten Wassersensor (3), der dazu eingerichtet ist, beim Erreichen eines zweiten Wasserstandes (30) eine Wasserstandswarnung auszugeben,
wobei der zweite Wassersensor (3) über einen Systembus (12) mit der Steuerung (10) des Bootsantriebes kommuniziert und die Steuerung (10) dazu eingerichtet ist, auf den Empfang der Wasserstandswarnung hin eine Warnung auszugeben,
wobei auf den Empfang der Wasserstandswarnung hin die Leistung des Bootsantriebes reduziert wird.

2. Vorrichtung (1) gemäß Anspruch 1, **dadurch gekennzeichnet, dass** der erste Wassersensor (2) oberhalb des zweiten Wassersensors (3) angeordnet ist und der erste Wasserstand (20) oberhalb des zweiten Wasserstandes (30) angeordnet ist.

3. Vorrichtung (1) gemäß Anspruch 1 oder 2, **dadurch gekennzeichnet, dass** der erste Wassersensor (2) über eine Hardwareverbindung mit dem Bootsantrieb, insbesondere einer Antriebsbatterie des Bootsantriebes, verbunden ist, um den Bootsantrieb beim Erreichen des ersten Wasserstandes (20) direkt abzuschalten und insbesondere eine Antriebsbatterie des Bootsantriebes direkt abzuschalten.

4. Vorrichtung (1) gemäß Anspruch 3, **dadurch gekennzeichnet, dass** der erste Wassersensor (2) in einer Antriebsbatterie des Bootsantriebes angeordnet ist und bevorzugt jeweils ein erster Wassersensor (2) in jeder Antriebsbatterie angeordnet ist.

5. Vorrichtung (1) gemäß Anspruch 3, **dadurch gekennzeichnet, dass** der erste Wassersensor (2) außerhalb einer Antriebsbatterie des Bootsantriebes angeordnet ist und über die Hardwareverbindung mit einem Betriebsschalter der Antriebsbatterie direkt verbunden ist.

6. Vorrichtung gemäß einem der vorstehenden Ansprüche, **dadurch gekennzeichnet, dass** die Steuerung (10) dazu eingerichtet ist, auf den Empfang einer Wasserstandswarnung hin eine Sequenz zum Abschalten des Bootsantriebs einzuleiten, bevorzugt nach dem Ablauf einer vorgegebenen Zeitspanne.

7. Vorrichtung (1) gemäß einem der vorstehenden Ansprüche, **dadurch gekennzeichnet, dass** der erste Wassersensor (2) über einen Systembus (12) mit der Steuerung (10) des Bootsantriebes kommuniziert und die Steuerung (10) dazu eingerichtet ist, beim Empfang einer Abschaltmeldung vom ersten Wassersensor (2) den Bootsantrieb abzuschalten.

8. Vorrichtung (1) gemäß Anspruch 8, **dadurch gekennzeichnet, dass** die Steuerung (10) dazu eingerichtet ist, beim Empfang einer Meldung über das Abschalten des Bootsantriebes vom ersten Wassersensor (2) eine Warnung auszugeben.

9. Vorrichtung (1) gemäß einem der vorstehenden Ansprüche, **dadurch gekennzeichnet, dass** der erste Wassersensor (2) in Reihe mit einem Not-Aus Schalter (22) des Bootsantriebes geschaltet ist.

10. Vorrichtung (1) gemäß einem der vorstehenden Ansprüche, **dadurch gekennzeichnet, dass** die Steuerung (10) des Bootsantriebs dazu eingerichtet ist, beim Empfang einer Wasserstandswarnung von dem zweiten Wassersensor (3) und/oder beim Empfang einer Meldung über das Abschalten des Bootsantriebes vom ersten Wassersensor (2) eine Lenzpumpe zum Entfernen des Wassers aus dem Boot einzuschalten.

## Claims

1. Device (1) for monitoring a boat drive, preferably for monitoring a drive battery of a boat drive, comprising a control system (10) and a first water sensor (2) configured to switch off the boat drive when a first water level (20) is reached,
**characterized by**
a second water sensor (3) configured to output a water level warning when a second water level (30) is reached,
wherein the second water sensor (3) communicates by means of a system bus (12) with the control system (10) of the boat drive and the control system (10) is configured to output a warning in response to receiving the water level warning,
wherein the power of the boat drive is reduced upon reception of the water level warning.

2. Device (1) according to claim 1, **characterized in that** the first water sensor (2) is arranged above the second water sensor (3) and the first water level (20) is arranged above the second water level (30).

3. Device (1) according to claim 1 or 2, **characterized in that** the first water sensor (2) is connected by means of a hardware connection to the boat drive, in particular a drive battery of the boat drive, so as to switch off the boat drive directly when the first water level (20) is reached and in particular to switch off a drive battery of the boat drive.

4. Device (1) according to claim 3, **characterized in that** the first water sensor (2) is arranged in a drive battery of the boat drive and preferably a first water sensor (2) is arranged in each drive battery.

5. Device (1) according to claim 3, **characterized in that** the first water sensor (2) is arranged outside a drive battery of the boat drive and is directly connected by means of the hardware connection to an operating switch of the drive battery.

6. Device according to any of the preceding claims, **characterized in that** the control system (10) is configured, upon reception of a water level warning, to initiate a sequence for switching off the boat drive, preferably after the expiration of a predetermined time period.

7. Device (1) according to any of the preceding claims, **characterized in that** the first water sensor (2) communicates by means of a system bus (12) with the control system (10) of the boat drive and the control system (10) is configured to switch off the boat drive upon reception of a switch-off message from the first water sensor (2).

8. Device (1) according to claim 8, **characterized in that** the control system (10) is configured to output a warning upon reception of a message about the switching off of the boat drive from the first water sensor (2).

9. Device (1) according to any of the preceding claims, **characterized in that** the first water sensor (2) is connected in series with an emergency stop switch (22) of the boat drive.

10. Device (1) according to any of the preceding claims, **characterized in that** the control system (10) of the boat drive is configured, upon reception of a water level warning from the second water sensor (3) and/or upon reception of a message about the switching off of the boat drive from the first water sensor (2), to switch on a bilge pump to remove water from the boat.

## Revendications

1. Dispositif (1) pour la surveillance d'un entraînement de bateau, de préférence pour la surveillance d'une batterie d'entraînement d'un entraînement de bateau, comprenant une commande (10) et un premier capteur d'eau (2) qui est conçu afin de mettre hors service l'entraînement de bateau lors de l'atteinte d'un premier niveau d'eau (20),
**caractérisé par**
un second capteur d'eau (3) qui est conçu afin d'émettre un avertissement de niveau d'eau lors de l'atteinte d'un second niveau d'eau (30),
dans lequel le second capteur d'eau (3) communique par le biais d'un bus système (12) avec la commande (10) de l'entraînement de bateau et la commande (10) est conçue afin d'émettre un avertissement suite à la réception de l'avertissement de niveau d'eau,
dans lequel la puissance de l'entraînement de bateau est réduite suite à la réception de l'avertissement de niveau d'eau.

2. Dispositif (1) selon la revendication 1, **caractérisé en ce que** le premier capteur d'eau (2) est agencé au-dessus du second capteur d'eau (3) et le premier niveau d'eau (20) est agencé au-dessus du second niveau d'eau (30).

3. Dispositif (1) selon la revendication 1 ou 2, **caractérisé en ce que** le premier capteur d'eau (2) est relié par le biais d'une liaison matérielle à l'entraînement de bateau, en particulier une batterie d'entraînement de l'entraînement de bateau afin de mettre directement hors service l'entraînement de bateau lors de l'atteinte du premier niveau d'eau (20) et de mettre directement hors service en particulier une batterie d'entraînement de l'entraînement de bateau.

4. Dispositif (1) selon la revendication 3, **caractérisé en ce que** le premier capteur d'eau (2) est agencé dans une batterie d'entraînement de l'entraînement de bateau et de préférence respectivement un premier capteur d'eau (2) est agencé dans chaque batterie d'entraînement.

5. Dispositif (1) selon la revendication 3, **caractérisé en ce que** le premier capteur d'eau (2) est agencé en dehors d'une batterie d'entraînement de l'entraînement de bateau et est directement relié par le biais de la liaison matérielle à un interrupteur de service de la batterie d'entraînement.

6. Dispositif selon l'une quelconque des revendications précédentes, **caractérisé en ce que** la commande (10) est conçue afin d'introduire une séquence pour la mise hors service de l'entraînement de bateau suite à la réception d'un avertissement de niveau d'eau, de préférence après l'expiration d'un laps de temps prédéfini.

7. Dispositif (1) selon l'une quelconque des revendications précédentes, **caractérisé en ce que** le premier capteur d'eau (2) communique par le biais d'un bus système (12) avec la commande (10) de l'entraînement de bateau et la commande (10) est conçue afin de mettre hors service l'entraînement de bateau lors de la réception d'un message de mise hors service du premier capteur d'eau (2) .

8. Dispositif (1) selon la revendication 8, **caractérisé en ce que** la commande (10) est conçue afin d'émettre un avertissement lors de la réception d'un message sur la mise hors service de l'entraînement de bateau du premier capteur d'eau (2).

9. Dispositif (1) selon l'une quelconque des revendications précédentes, **caractérisé en ce que** le premier capteur d'eau (2) est monté en série avec un interrupteur d'arrêt d'urgence (22) de l'entraînement de bateau.

10. Dispositif (1) selon l'une quelconque des revendications précédentes, **caractérisé en ce que** la commande (10) de l'entraînement de bateau est conçue afin de mettre en service une pompe d'assèchement pour le retrait de l'eau hors du bateau lors de la réception d'un avertissement de niveau d'eau du second capteur d'eau (3) et/ou lors de la réception d'un message sur la mise hors service de l'entraînement de bateau du premier capteur d'eau (2).
